# EUROPEAN PATENT APPLICATION

(11) **EP 2 345 699 A1**
(43) Date of publication of application: **20.07.2011**
(21) Application number: 10150745.7
(22) Date of filing: 14.01.2010
(51) Int. Cl.: C08L 83/04, C08L 83/07

(54) **Silicone elastomer compounds and siloxane containing elastomer blends**

(71) Applicant: Armacell Enterprise GmbH, 48153 Münster (DE)
(72) Inventor: Weidinger, Jürgen, 48167, Münster (DE); Harakal, Mark E., 48143, Münster (DE)
(74) Representative: von Füner, Nicolai

(57) **Abstract**

The present invention relates to a curable elastomeric material based on and/or containing siloxane polymer, the process for manufacturing of such material and the use of such material.

## Description

The present invention relates to a curable elastomeric material based on and/or containing siloxane polymer, the process for manufacturing of such material and the use of such material.

Polysiloxane based elastomer compounds (silicones) are known for their very good hot air resistance and low temperature flexibility, both properties mainly arising from the non-polar and inorganic polymer backbone and low intermolecular interactions provided by polysiloxanes. However, the named polymer chemist also determines properties that are widely considered as being negative, such as high surface energy leading to problems in adhering and printing/painting silicones, and high gas/vapour permeability, as well as poor mechanical properties when comparing silicones to other elastomers. Numerous efforts have been taken to overcome these issues, such as by surface treatment, extensive work on copolymers, fillers and additives etc., none of them being successful to more than a very limited extent. Only little work has been done trying to modify and improve the a.m. deficiencies putting a scope on the crosslinking system: silicone elastomers are usually obtained by crosslinking the polysiloxane polymers at their functional sites, such as silyl, hydroxyl or vinyl groups. Best properties are achieved when applying heat for crosslinking, and preferred curing (or vulcanisation) agents are peroxides as well as noble metal (i.e. platinum) catalyst systems. Curing polysiloxanes by sulphur based agents could be interesting in regard to adding more polarity and new properties to the compound, however, sulphur based crosslinking of silicones is said to be difficult, even partially impossible, therefore, only a limited number of research in this field had been carried out. Sulphur and sulphur compounds are very rarely used in silicone industry as they will intoxicate silicone crosslinking catalysts and/or negatively influence processing or final properties. Sometimes sulphur based chemicals are used for controlled modification of properties, such as release, transparency etc. (see e.g. JP 2005325315, US 2004010109), or the balance of crosslinking and expansion in foaming, as in US 5998548. EP 0204526 is mentioning sulphur containing metal complex catalysts for crosslinking; however, the crosslinking is not driven by the sulphur itself, as it is a kind of internal inhibitor for the catalyst. JP 11140316 mentions the possibility of crosslinking silicone by sulphur chloride, a very reactive agent that will cause side reactions and by-products which is not favoured in the rubber industry, thus, not a versatile and applicable solution. JP 2080447 discloses a (yet vulcanised) silicone rubber powder being blended into an EPDM compound which is then sulphur crosslinked. The silicone here is not vulcanized into the EPDM, but only acting as an additive for modification of surface properties. JP 55031817 claims a compound of organic rubber with polysiloxane where sulphur curing takes place, however, the polysiloxane itself is a kind of property modifying additive and is bond to other parts of the compound by silazane crosslinking, not by the sulphur. GB 1526297 describes block-copolymers containing polysiloxane units that can be crosslinked by sulphur. However, the polysiloxane units are only spacers and do not take part in the crosslinking, as the other block of the copolymer is consisting of unsaturated organics designed for interaction with sulphur containing crosslinkers. A similar approach has been taken in US 4657965/EP 0183382 where the organic side groups of the polysiloxane are significantly modified to be more accessible to sulphur radical attack and crosslinking. All the a.m. methods require a modification of the polymer chain and/or the side groups which will lead to tremendous efforts and expenses in synthesis of the respective polysiloxanes as the industrial process for their production is a polycondensation followed by several equilibration steps which would render the introduction of foreign chemical building blocks very difficult and uneconomic. US 4617347 claims a blend of silicone and organic rubbers which is said not to be directly curable by sulphur. The solution is said to be a modification of terminal vinyl groups of the silicone by again aggressive substances (chlorothio-sulfonamides) to render them sulphur-compatible. However, such modification is obsolete as vinyl groups can be reacted to be compatible during crosslinking when taking the right combination of sulphur based agents (see below). US 4066603/DE 2702046 and US 4151156 both disclose the synthesis of mercapto-organo substituted siloxanes that would in principle also be accessible for sulphur, similar for JP 2107657 claiming amino-modification, but it can be expected that such siloxanes are both expensive and will no more provide the typical silicone property profile, especially in regard to heat resistance. Due to the economy, sulphur containing siloxanes are almost exclusively used as coupling agents in small quantities (see e.g. US 20070185279) Some rather outdated literature mentions sulphur containing agents as compression set additives is peroxide crosslinking (US 751282 from 1953) or siloxanes as additives/processing aids not taking part in crosslinking in sulphur curing rubber systems (US 628059 from 1949). Ind. Eng. Chem.1957, vol. 49, pp 49-54 mentions the crosslinking of vinyl substituted polysiloxanes by sulphur. US 2877211 from 1959 describes sulphur containing curing agents for silicone resins (sulphur crosslinking of silicone resins is significantly easier due to the different production process for the siloxanes resin raw materials and the enlarged possibilities to modify them. Even some examples of sulphur supported crosslinking and siloxanes in an expandable mixture can be found, see GB 788598 and GB 847081). However, all that could be achieved as final property profile in the mentioned literature was poor even in comparison to the 1950s' silicones typically bad mechanical levels. Additionally, the vinyl content necessary to obtain reasonable crosslinking is higher by an order of magnitude than usually supplied today. KR 100405123 mentions the crosslinking of a natural rubber/organic rubber/silicone compound (containing vinyl groups) with sulphur, but without disclosing a reproducible or feasible method; however, peroxide and irradiation crosslinking are mentioned as other -preferred- methods, similar for KR 20050022235 wherein an organic rubber is adhered to a silicone rubber, but sulphur is only mentioned when it comes to curing the organic layer. KR 100404076 is more precise and clearly mentions the parallel use of sulphur and peroxide to cure an organic rubber/silicone compound where it can be expected that the peroxide is responsible for crosslinking the polysiloxane. US 4607060 discloses expanded material made from -among various others-silicones to be curable by radical initiators where sulphur is also mentioned together with peroxides, together with hydrazinium salts or similar aggressive (and critical) compounds.

A major object of the present invention thus is to provide a silicone elastomer and silicone containing elastomer blends not showing the deficiencies mentioned above but maintaining the properties well appreciated for silicones.

Surprisingly, it is found that such polysiloxane based elastomeric material can be achieved by sulphur based crosslinking if properly applied on properly prepared base mixtures.

The claimed material contains compound (A), which is a polysiloxane polymer (abbreviation Q) or a mixture of such polymers, and which can be present in the formulation to a level of 10 to 100 weight percent, based on the total polymer content.

The polysiloxanes (A) can be chosen from the polymers of the general formula (a) 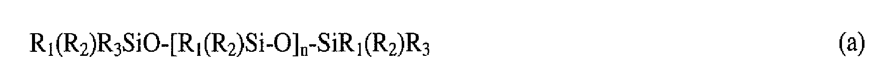 where R₁, R₂, R₃ independently can represent -H, -OH, vinyl, phenyl, trifluoropropyl, alkyl, alkenyl, alkinyl, aryl and/or hetero substituted alkyl, alkenyl, alkinyl or aryl groups, given the fact that at least one of the substituents R₁, R₂, R₃ essentially needs to contain an unsaturated bond acting as an active crosslinking site for vulcanisation. Preferably, this unsaturated bond is represented by a vinyl group, and with this group preferably being at terminal position in regard to the polymer chain, as polysiloxanes bearing the like structures are commonly available. The chain length n of formula (a) may vary in a wide range from 10 to 1,000,000 Si-O units depending on the targeted compound properties. A preferred molecular weight distribution range would be within 10² and 10⁵ g/mol within a preferred viscosity range of 10 to 100,000 Pa*s (at 25 °C), the vinyl content preferably is at least 0.35 %, as increased vinyl content will facilitate sulphur based crosslinking.

The claimed material furthermore may contain compound (B) which is a polysiloxane of the formula (a) where R₁, R₂, R₃ independently can represent the substituents mentioned for compound (A), however, preferably at least 80% of these substituents are alkyl groups, preferably methyl groups, given the fact that compound (B) needs to be of significantly lower viscosity than compound (A) to act as a processing aid for ensuring a good dispersion of solids in the matrix of (A) when the mixture is prepared. R₁, R₂, R₃ do not essentially need to contain an unsaturated bond acting as an active crosslinking site for vulcanisation, however, this can be helpful if it is intended to bond the compound (B) to (A) and/or (C) or other ingredients of the mixture. The chain length n for compound (B) of formula (a) may vary in a wide range from 5 to 20,000 Si-O units depending on the intended final mixture and dispersion. A preferred molecular weight distribution range is within 10² to 10³ g/mol. The compound (B) may be present in the formulation from 0 to 10 weight %.

The claimed material includes one or more fillers (C), which may be chosen from the classes of both active and inactive fillers, such as metal and non metal oxides, carbon black, metal hydroxides, silica, silicates, carbonates, and so on, and mixtures thereof. Especially preferred are fillers of the classes of aluminium trihydrates, silicon oxides/silicon hydrates, such as pyrogenic silica, precipitated silica, silicates, quartz etc. The filler(s) (C) may be contained to an extent of 5-600 weight %, preferably 10-300 weight %, especially preferred 30-100 weight %, calculated based on 100 weight % of the total polymer content.

The claimed material contains a suitable crosslinking system (D), such as sulphur based crosslinking systems containing sulphur and all kind of organic accelerators used in organic rubber industry. Preferred are sulphur, thiurames, polysulfides, thiocarbamates, thioureas, thiazyls, sulphur-Si-O compounds and mixtures thereof, especially preferred are sulphur, pipentamethylenethiuram tetrasulfide, zinc-N-dibenzyl-dithiocarbamate, N,N'-diphenyl thiourea, ethylene thiourea and dibenzothiazyl disulfide, sulphur silanes and sulphur siloxanes and mixtures thereof.

The claimed material furthermore may contain additional crosslinkers or co-agents (E) being known to have positive influence on the final vulcanisate's properties, such as silanes, especially organosubstituted silanes, hydrosilanes, hydroxysilanes and heterosubstituted silanes. Especially preferred is the material class of sulphur silanes.

The claimed material may also contain co-agents (F) that are known to provide supplementary effects to (D) and/or (E), such as unsaturated polymers which we found during our work may act as a co-agent facilitating and accelerating crosslinking. Preferred are unsaturated polymers having similar polarity and/or morphology like the polysiloxanes, especially preferred are EPDM polymers.

The claimed material may also contain co-crosslinkers (G) that are known to have supplementary effects to (D) or (E) or (F), such as peroxides.

The claimed material furthermore may contain flame retardant agents (H) and mixtures thereof, as used in the rubber and plastics industry, such as halogen compounds, metal oxides and hydroxides, metal sulphides, phosphor and phosphorus compounds, melamine based compounds and mixtures thereof. A preferred class of flame retardant agents would be brominated organics which can be combined with synergists like antimony trioxide.

The claimed material may contain plasticizers and/or dispersion aids and/or emulsifiers (I) apart from (B) to improve its compounding and manufacturing properties as well as its final properties, such as hardness, in a range of 0-200 weight %, calculated based on 100 weight % of the total polymer content. Preferred are substances that facilitate mixing of ingredients like (A) and (B) together with ingredients of differing morphology, polarity etc. as e.g. (K), such as paraffin, mineral oil based plasticizers etc. Especially preferred are waxes and oils bearing surface active properties comparable to tensides, or long chain tensides themselves. Compounds (I) to ensure a homogeneous and stable blend of the polysiloxane with other polymers may therefore also be salts of long-chain fatty acids, pH buffering systems, hydrous and anhydrous alkali silicate, clays, copolymers, terpolymers etc. of homo- or preferred heteropolymeric character, and mixtures thereof.

The elastomeric compositions useful in the present invention may be prepared by any conventional procedure such as for example, by mixing the ingredients in an internal mixer or on a mill.

The claimed material furthermore may contain any additive (J) for improving its manufacturing, application, aspect and performance properties, such as inhibitors, retarders, accelerators, stabilizers (e.g. against heat, UV, depolymerisation/reversion), colours etc. Additives (J) can also be chosen of the class of char-forming and/or intumescent additives, such as expanding graphite, vermiculite, perlite etc., to render the material self-intumescent in case of fire to close and protect e.g. wall and bulkhead penetrations. Additives (J) can also consist of substances that will lead to a self-ceramifying effect to protect cables, pipes, wall penetrations etc. in case of fire, such as boron compounds, silicon containing compounds etc. Additives (J) can also consist of internal adhesion promoters to ensure self-adhesive properties in co-extrusion and co-lamination applications, such as silicate esters, functional silanes, polyols etc.

The claimed material may contain additional polymers or polymer compounds (K) that can be mixed with the rubber compound to obtain a rubber or rubber/plastics blend, such as organic rubbers, other silicones, thermoplastic elastomers, thermoplasts and thermosets/resins, and mixtures thereof. Especially preferred are organic rubbers and organic rubber polymers, as the crosslinking system of the claimed material is fully compatible to those found in organic rubber compounds and therefore blending and co-vulcanisation are easily feasible.

The claimed material may furthermore contain fibres (L) or chopped fibres or pulp as both filler material and reinforcing agent, such as glass fibres, polyaramide fibres, and polyester fibres and so on, and mixtures thereof.

A prominent advantage of the claimed material is the fact that its surface properties are influenced by the crosslinking in a way that gluing, printing etc. are facilitated in comparison to existing polysiloxane based compounds.

A resulting major advantage of the claimed material is the fact that it can be easily surface treated, e.g. coated, welded, braided etc. with various agents and by various means.

A further advantage of the claimed material is its reduced gas permeability, achieved both by the crosslinking system itself as well as by the crosslinking system's positive impact on the highest possible filling rate being generally higher than for known silicones and allowing also to add fillers to a high extent that usually are not compatible with standard silicones, which is a resulting advantage of the claimed material.

A major advantage of the claimed material is the fact that it can be crosslinked by widespread, well-examined and economic methods like sulphur curing.

A further advantage of the claimed material is the fact that the vulcanisation can be influenced as known from organic rubbers by accelerating, retarding etc. which is not feasible e.g. with peroxide curing.

A further advantage of the claimed material is that additives used, known and tested within the organic rubber industry may now be used in polysiloxane based materials an do neither disturb the vulcanisation system nor are rendered inefficient by standard silicone compositions, means, can act as basically was intended, such as for brominated flame retardants.

A further advantage of the claimed material is that phthalates are not needed as plasticizers which are partially under discussion and being partially prohibited already for the same reason. Plasticization in the claimed material is achieved by siloxane based ingredients as well as by mixtures thereof with organic plasticizers.

It is a further advantage of the claimed material that it can be produced and processed in an economic way on equipment as commonly used in the rubber industry, such as for mixing and shaping processes, e.g. by moulding, extrusion and other shaping methods. It shows versatility in possibilities of manufacturing and application. It can be extruded, co-extruded, laminated, moulded, co-moulded etc. as single item or multilayer and thus it can be applied in unrestricted shaping onto various surfaces in automotive, transport, aeronautics, building and construction, furniture, machinery engineering and many other industries.

It is a resulting advantage of the claimed material that it can be transformed and given shape by standard methods being widespread in the industry and that it does not require specialized equipment.

A further advantage of the claimed material is the fact that it is easily colourable.

It is a major advantage of the claimed material that the a.m. improvements are achieved without significantly affecting those properties of polysiloxane based elastomers that are considered as good or even essential, such as heat resistance, cold flexibility etc. (some properties being even best in class with sulphur curing, see table 2: glass transition temperature, flammability/fire behaviour and LOI -obviously there is a synergy effect with the EPDM polymer in example 3), means, the basic typical and positive silicone properties are maintained.

### Examples

In the following examples and comparative examples, elastomer processing was carried out in the following manner: processing was done in an internal mixer having an inner volume of 0.5 litres; kneading was carried out at between approximately 30 and 60 rpm. The batches were processed as two pass mixes. In the first pass, all ingredients except the sulphur containing agents to the internal mixer -polymers first, followed by emulsifiers, then fillers etc.- and mixed to a temperature of starting from 100 °C rising up within 30 min to about 160 °C, let cool down and dumped. In the second pass, the base compound was mixed together with the sulphur containing agents to 105 °C, dumped homogenized on a roller mill and cooled down on the mill to ambient temperature. In case of peroxides used the base was mixed with dicumyl peroxide on a roller mill at 70 °C and cooled down on the mill. Sample plates of 20x20 cm size and 2 mm or 6 mm thickness, respectively, were prepared in a lab press equipment at 160°C for 15 minutes.

Table 1 illustrates the elastomeric composition formulations for test samples for Examples 3 and 4 of the present invention, and for Comparative Examples 1 and 2.

**Table 1: Chemical composition and properties: declaration of ingredients is calculated based on 100 weight % of total polymer content physical tests were conducted for all compounds after mixing and vulcanisation.**

| | comparative Example | comparative Example 2 | Example 4 | Example 5 |
|---|---|---|---|---|
| Polysiloxane | 90 | 70 | 80 | 75 |
| EPDM | - | 10 | 5 | 10 |
| Silicone resin | 4 | 9 | 8 | 6 |
| Silicone oil | 6 | 5 | 3 | 3 |
| Ethylene-vinylacetate | - | 6 | 4 | 6 |
| Aluminium trihydrate | 30 | 30 | 30 | 100 |
| Silica | 30 | 30 | 30 | 10 |
| Copolyester | 5 | 5 | 5 | 5 |
| Carbon black | 12 | 12 | 12 | - |
| Di-isononylphthalate | - | 12 | 12 | 5 |
| Sulphur | - | - | 5 | 2 |
| Dipentamethylene thiuramtetrasulphide | - | - | 0.5 | 0.3 |
| Zinc dibutyldithiocarbamate | - | - | 0,1 | 0.05 |
| Ethylene thiourea | - | - | 0,1 | 0,1 |
| Zinc dimethyldithiocarbamate | - | - | 0.5 | 0.3 |
| Dicumyl peroxide | 0.5 | 0.5 | - | - |
| **Adherable with contact glue (Pattex/Henkel)** | **no** | **no** | **yes** | **yes*** |
| **Adherable with PSA (3M)** | **no** | **no** | **yes** | **yes*** |
| **Paintable (water based colour, Caparol)** | **no** | **no** | **yes** | **yes*** |
| **Decomposition temperature (°C), TOGA** | **480*** | **460** | **430** | **430** |
| **Glass transition temperature (°C), DSC** | **-89** | **-81** | **-111*** | **-96** |
| **Limiting oxygen index (%), ISO 4589** | **32** | **28** | **42*** | **35** |
| **Fire classification EN 12667/EN 13823** | **D S1 d0** | **D S2 d0** | **D S1 d0** | **C S1 d0*** |
| **Tensile strength (N/mm²), ISO 527** | **7** | **5.5** | **6.5** | **9.5*** |
| **Tear resistance (N/mm), ASTM D624** | **18** | **15.5** | **23** | **27*** |
| **Elongation at break (%), ISO 527** | **450** | **360** | **670*** | **660** |

| | | | | |
|---|---|---|---|---|
| *marked are best values of the set. | | | | |

Table 2 describes used raw materials and sources thereof.

**Table 2: Used chemicals**

| **Chemical** | **Trade name** | **Supplier** |
|---|---|---|
| Polysiloxane | Rhodorsil® 753 | Bluestar Silicones |
| Silicone resin | Resin Modifier 4-7081 | Dow Coming |
| Silicone oil | AK 1000/AK 50000 | Wacker Chemie |
| Fumed silica | Aerosil® 300 | Evonik Degussa |
| Copolyester | Griltex®P-1533 EP | EMS-Griltech |
| Ethylene-vinylacetate | Elvax® 250 | DuPont Elastomers |
| Aluminium trihydrate | Martinal® 107 LE | Martinswerk GmbH |
| Carbon black | Nhumo® N 660 | Nhumo |
| Di-Isononylphthalate | Palatinol® N | BASF |
| Sulphur | Rubersul 700 | Nasika Products S.A. |
| Dipentamethylenethiuram-Tetrasulphide | Nasika DPTT-70 | Nasika Products S.A. |
| Zinc dibutyldithiocarbamate | Nasika ZDBC-75 | Nasika Products S.A. |
| Ethylene thiourea | Nasika ETU-75 | Nasika Products S.A. |
| Zinc diethyldithiocarbamate | Nasika ZDEC-70 | Nasika Products S.A. |
| Dicumyl peroxide | Di-cup® R | Arkema |

## Claims

1. An elastomeric material being curable by sulphur based crosslinking and containing 50 to 100 parts by weight of poly(diorgano-organovinyl-siloxane) based on the total polymer showing a vinyl content of at least 0.35 % and containing an emulsifier.

2. The material according to claim 1 wherein the polysiloxane is blended with at least 0.2 parts by weight of unsaturated organic polymer based on the total polymer content, preferably with 1 to 30 parts, especially preferred with 2 to 10 parts of unsaturated organic polymer.

3. The material according to claim 2 wherein the unsaturated organic polymer is a copolymer, preferred is an ethylene-propylene-copolymer, especially preferred is EPDM.

4. The material according to one of claims 1-3 which contains fillers and additives.

5. The material according to claim 4 which is vulcanized.

6. A process for manufacturing the material according to one of claims 1-4 in a one-step-mixing process.

7. A process for manufacturing the material according to claim 5 in a one-step-mixing and a one-step-shaping process.

8. The use of a material according to one of claims 2-5 for producing rubber parts.

9. The use of a material according to claim 8 for applications where a combination of chemical, physical and heat stability is desired in connection with economic ways of production, printability, lower gas permeability etc. in comparison to standard polysiloxane based elastomers.
